# FASCICULE DE BREVET EUROPEEN

(11) **EP 0 961 052 B1**
(45) Date de publication et mention de la délivrance du brevet: **24.08.2005**
(21) Numéro de dépôt: 99118174.4
(22) Date de dépôt: 13.05.1997
(51) Int. Cl.: F16H 1/16, F16H 55/24, H02K 7/08, H02K 7/116, E05F 15/16

(54) **Motoréducteur notamment pour l'entrainement d'équipements de vehicules**
Getriebemotor, insbesondere zum Antrieb von Zubehörteilen in Kraftfahrzeugen
Geared motor, particularly for operating vehicle fittings

(30) Priorité: 13.05.1996 FR 9605924; 11.03.1997 FR 9702873
(43) Date de publication de la demande: 01.12.1999
(62) Demande divisionnaire de: 97924086.8
(73) Titulaire: ArvinMeritor Light Vehicle Systems-France, 45600 Sully sur Loire (FR)
(72) Inventeur: Quere, Jérôme, 14112 Bieville-Beuville (FR); Laurandel, Hervé, 14000 Caen (FR)
(74) Mandataire: Jacobson, Claude

(56) Documents cités:
- DE-A- 3 815 356
- US-A- 4 790 202
- US-A- 5 027 670
- US-A- 5 169 245
- US-A- 5 212 999

## Description

La présente demande est une demande divisionnaire de la demande de brevet européen n° 97.924.086.8-2306, correspondant à WO97/43564A.

La présente invention a pour objet un motoréducteur, notamment pour l'entraînement d'équipements de véhicules, du type conforme au préambule de la revendication 1 et connu par exemple de US 5027670A.

Les carters réducteurs des motoréducteurs actuels comprennent les pièces suivantes : roue dentée, moyeu, joint d'étanchéité à lèvre, couvercle et tambour en matière plastique pour l'enroulement d'un câble, par exemple, de lève-vitre ou pignon en acier fritté et moyeu en matière plastique surmoulé.

Cette structure comporte un nombre relativement élevé de pièces, ce qui entraîne un coût de fabrication relativement important.

Par ailleurs, il existe un jeu axial dans la ligne d'arbre montée dans le motoréducteur. Ce jeu axial est dû à l'empilement des dispersions des dimensions des différentes pièces au montage (arbre, butée, carter, culasse, etc.), ces différentes pièces mises bout à bout étant moins longues que leurs logements.

Jusqu'à présent ce jeu axial a été compensé manuellement au moyen d'une vis logée dans l'extrémité du carter en regard du trou d'arbre d'induit, et qui est bloquée par une colle assurant en même temps l'étanchéité. Ce procédé de réglage est long à exécuter, donc onéreux et accroît le coût de fabrication du motoréducteur.

Le brevet USA 5.169.245 décrit un motoréducteur dans lequel le jeu axial est compensé par un ressort hélicoïdal exerçant sur l'extrémité de l'arbre d'induit une poussée axiale avec interposition d'une pièce qui peut venir en butée sur un épaulement du carter, lorsque le ressort subit une compression déterminée. Dans un tel dispositif, le ressort se comprime sous l'effet de l'effort axial et, lorsque le sens de rotation du motoréducteur est inversé, l'énergie emmagasinée dans le ressort est brusquement libérée. De ce fait, l'extrémité opposée de l'arbre d'induit est violemment plaquée contre le fond du stator, ce qui provoque un bruit très gênant.

Enfin, un autre problème résulte du sertissage d'une bague entre l'arbre du motoréducteur et le stator. En effet, le diamètre intérieur de cette bague varie en raison des irrégularités du diamètre de son logement situé au fond du stator. De ce fait, le jeu radial entre l'arbre et la bague présente des irrégularités, qui entraînent des oscillations gênantes de l'arbre.

L'invention a pour but de réaliser une compensation automatique du jeu axial de la ligne d'arbre du motoréducteur des moyens simples, efficaces et peu onéreux et qui en outre ne risquent pas de détériorer le dispositif de réglage.

Conformément à l'invention, le motoréducteur comporte à cet effet les caractéristiques de la partie caractérisante de la revendication 1.

Ce système de butée permet de limiter à une valeur prédéterminée l'effort de compression axiale subi par l'amortisseur lorsque le motoréducteur est en fonctionnement.

Par ailleurs, le fait d'utiliser un amortisseur en élastomère et non un ressort hélicoïdal évite les inconvénients liés à ce dernier. En effet, un élément en élastomère présente la propriété d'absorber une partie de l'énergie de déformation par friction interne des chaînes moléculaires du matériau élastomère. Cette absorption d'une partie de l'énergie générée par l'effort d'appui, permet de diminuer considérablement le niveau sonore du bruit gênant lors de l'inversion du sens du moteur.

L'effort de butée maximum subi par l'amortisseur peut être par exemple de 100 Newtons, conformément à des normes en vigueur, Au delà de cette valeur, l'effort axial développé par l'arbre d'induit pendant le fonctionnement du motoréducteur s'exerce sur la paroi du carter via le système de butée, ce qui évite toute détérioration de l'amortisseur par un effort axial excessif.

D'autres particularités et avantages de l'invention apparaîtront au cours de la description qui va suivre, faite en référence aux dessins annexés, qui en illustrent plusieurs formes de réalisations à titre d'exemples non limitatifs.

La figure 1 est une vue éclatée partielle, sensiblement à l'échelle d'une forme de réalisation du motoréducteur selon l'invention et plus particulièrement de son carter réducteur.

La figure 1A est une vue en coupe partielle suivant la ligne 1A-1A de la figure 1 d'un joint d'étanchéité entre la paroi du carter et une collerette de la roue dentée.

La figure 2 est une vue en coupe longitudinale et élévation partielle à échelle agrandie d'une extrémité de l'arbre d'induit et de la paroi de carter, comportant des moyens de réglage automatique du jeu axial qui ne sont pas conformes à l'invention.

La figure 3 est une vue en coupe longitudinale et élévation partielle à échelle agrandie d'un bout de l'arbre d'induit et du stator, illustrant un mode de réalisation d'une bague interposée entre l'arbre et le stator.

La figure 4 est une vue en perspective d'un pignon pouvant constituer l'organe de sortie du motoréducteur.

La figure 5 est une vue en élévation longitudinale et coupe partielle du motoréducteur muni d'un dispositif de compensation automatique du jeu axial de sa ligne d'arbre conforme à l'invention.

La figure 6 est une vue en coupe partielle à échelle agrandie par rapport à la figure 1 d'une forme de réalisation des moyens de réglage du jeu axial entre l'extrémité de l'arbre d'induit et la paroi du carter, le dispositif étant au repos avant mise sous charge.

La figure 7 est une vue en coupe transversale suivant 7/7 de la figure 6.

La figure 8 est une vue analogue à la figure 6, montrant le dispositif de compensation automatique du jeu axial dans sa position sans charge du motoréducteur assemblé pour la ligne.

La figure 9 est une vue analogue à la figure 8 montrant le dispositif dans sa position en fonctionnement du motoréducteur.

La figure 10 est un diagramme illustrant la variation de l'effort axial développé par le carter sur la ligne d'arbre du motoréducteur, en fonction de la compression subie par l'amortisseur de son dispositif de compensation automatique du jeu.

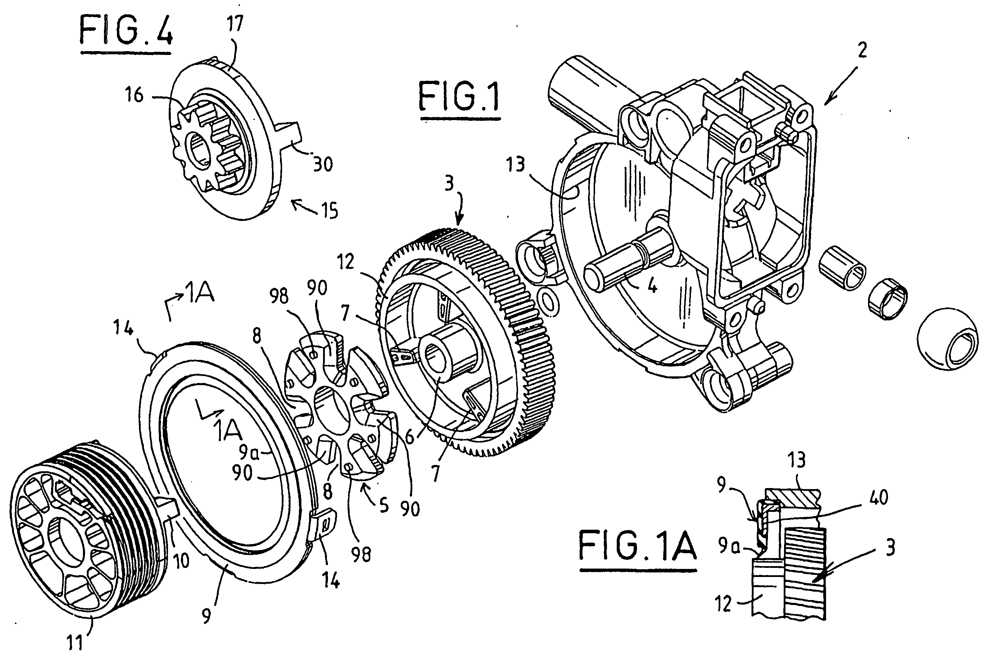

Le motoréducteur représenté aux figures 1 à 4 est destiné notamment à l'entraînement d'équipements de véhicules tels que lève-vitre électriques.

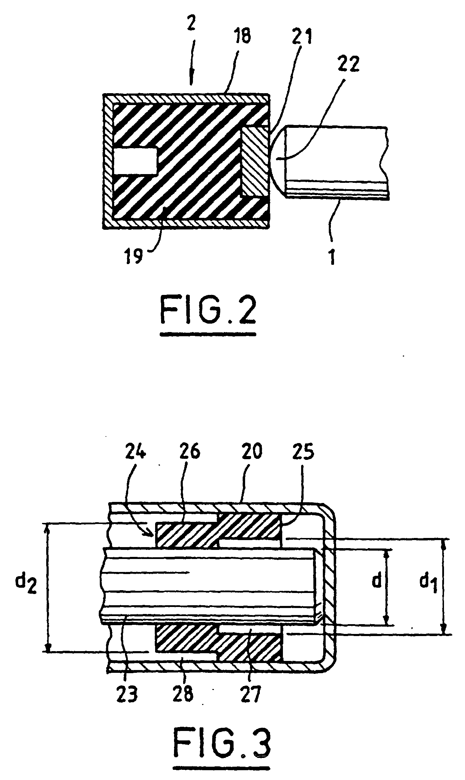

Il comprend un rotor (non représenté) pourvu d'un arbre d'induit dont on voit une extrémité 1 (figure 2), un carter réducteur 2 qui contient une roue dentée 3 montée sur un axe 4 perpendiculaire à l'arbre d'induit. Ce dernier comporte une vis sans fin (non représentée) avec laquelle la roue 3 est en prise. Le motoréducteur comprend également un amortisseur monobloc 5, logé à l'intérieur de la roue 3 et monté concentriquement au moyeu 6 de celle-ci, qui contient de plus des ailettes radiales 7 venant s'engager dans des encoches radiales correspondantes 8 de l'amortisseur 5 en matière élastique, de préférence élastomère. Des chanfreins 90 sont ménagés sur les bords des encoches 8.

L'amortisseur 5 est pourvu sur au moins l'une de ses faces de moyens de centrage dans une cavité délimitée entre la roue 3 et l'organe de sortie 11, Ces moyens sont dans l'exemple décrit constitués par des tétons 98 venus de moulage avec le reste de l'amortisseur et faisant saillie de ses faces.

Les tétons 98 assurent le centrage précité et réservent le volume nécessaire au gonflement de l'amortisseur 5 lors de sa compression.

Enfin, le carter réducteur 2 comprend un joint d'étanchéité annulaire 9 et un tambour 11 coaxial à l'amortisseur 5 et à la roue 3. Ce tambour est destiné à recevoir un câble notamment pour un lève vitre du type à câble, et constitue l'organe de sortie du motoréducteur. Le joint 9 est réalisé par surmoulage, par exemple sur une rondelle métallique 40 (fig.1A) emmanchée à force dans le carter réducteur 3. Le joint 9 comporte au moins une lèvre 9a en appui glissant sur une paroi annulaire intérieure 12 de la roue dentée 3. La paroi annulaire 12 est nécessitée par le fait que la liaison roue 3-moyeu 6 est à l'extérieur de ce dernier, et non intercalée entre l'axe 4 et la roue 3.

En variante, le joint pourrait être fixé sur la collerette et sa lèvre glisser sur la paroi du carter 3.

La paroi annulaire intérieure 12 fait légèrement saillie longitudinalement par rapport à la denture de la roue 3, en direction du tambour 11. Le joint annulaire 9 d'étanchéité disposé entre la paroi annulaire 12 et la paroi 13 du carter 2, assure ainsi l'étanchéité de ce dernier, sans nécessiter d'ajouter un couvercle.

A cet effet, le joint 9 peut être solidarisé soit avec la paroi 13 du carter 2, par exemple au moyen de pattes 14 d'encliquetage élastique dans le carter, et en appui glissant sur la périphérie de la paroi annulaire 12, soit être solidarisé avec cette dernière par tout moyen approprié par exemple par montage serrant dans l'espace situé entre la paroi annulaire 12 et la base de la roue dentée 23, en étant alors en appui glissant sur la paroi 13 du carter 2.

Le tambour 11 est pourvu de moyens de solidarisation en rotation avec l'amortisseur 5. Dans le mode de réalisation représenté, ces moyens sont constitués par des doigts 10 du tambour 11 venant s'engager dans des encoches radiales correspondantes 8. Les encoches 8 peuvent être par exemple au nombre de six, trois recevant des doigts 10 et trois recevant les ailettes 7. Grâce à cet agencement, le moyeu intermédiaire en matière plastique des motoréducteurs utilisés jusqu'à présent peut être supprimé, l'amortisseur 5 entraînant directement le tambour 11.

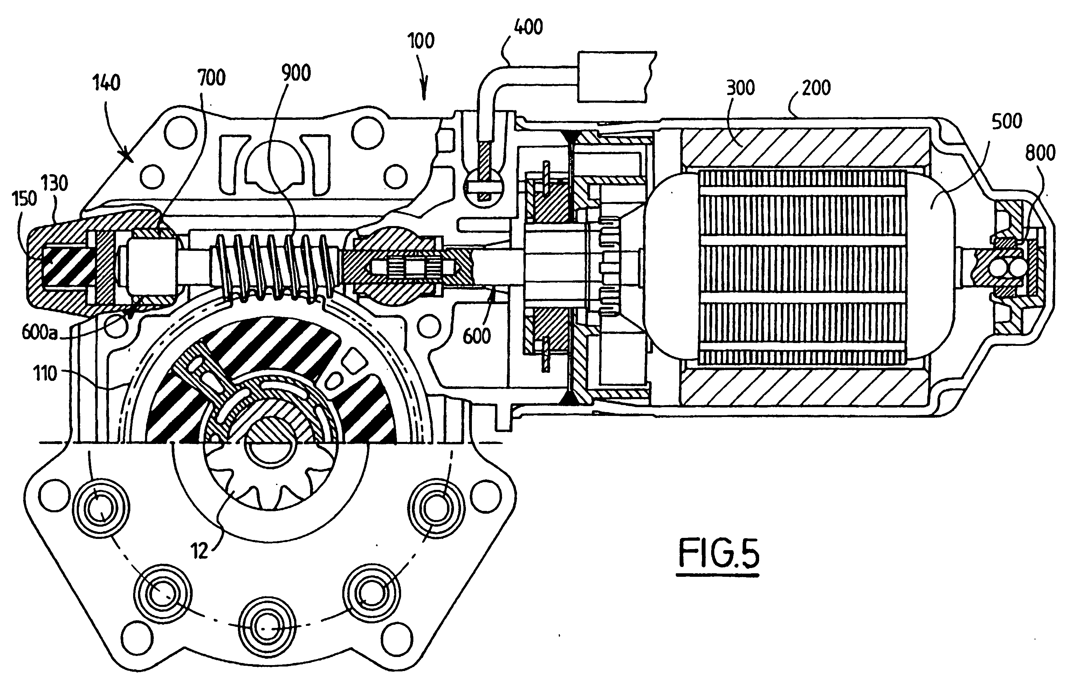

Dans une autre réalisation, le motoréducteur comporte un organe de sortie 15 constitué par un pignon 16 réalisé monopièce avec un moyeu 17 (Fig.4) intérieur à la paroi annulaire 12 de la roue dentée 3. L'organe de sortie 15 est réalisé de préférence en acier fritté. Le moyeu 17 est équipé de doigts 30 venant s'engager dans des encoches correspondantes 8 et permettant de solidariser l'organe 15 en rotation avec l'amortisseur 5.

Le motoréducteur est pourvu de moyens de réglage automatique du jeu axial entre l'extrémité 1 de l'arbre d'induit et la paroi 18 du carter 2 (Fig.2). Dans l'exemple représenté, ces moyens de réglage comprennent une butée amortisseuse 19 en un matériau élastique tel que du caoutchouc, remplissant le volume défini à cet endroit par la paroi 18, et une rondelle métallique 21 noyée dans la butée 19. Plus exactement la rondelle 21 est logée dans la face de la butée 19 tournée vers l'arbre 1, de telle façon que la surface de la rondelle 21 affleure la face transversale de la butée 19.

L'extrémité de l'arbre 1 est munie d'une capsule 22 en matière plastique, en appui contre la rondelle 21. L'ensemble constitué par l'arbre d'induit 1, sa capsule terminale 22, la rondelle 21 et l'amortisseur 19 est monté avec une légère précontrainte dans la paroi 18, afin de compenser automatiquement le jeu axial de l'arbre 1.

Suivant une particularité complémentaire du motoréducteur, l'extrémité 23 de l'arbre d'induit opposée à la butée 19 est montée dans une bague de roulement 24 constituée de deux parties étagées radialement 25, 26.

La première partie 25 a un diamètre extérieur égale à celui de la paroi intérieure du stator 20 sur laquelle elle est en appui, tandis que son diamètre intérieur d1 est supérieur au diamètre d de l'arbre 23. La seconde partie 26 possède un diamètre intérieure égal à celui d de l'arbre 23 sur lequel elle est en appui, et un diamètre extérieur d2 inférieur à celui de la paroi intérieure du stator 20.

Ainsi sont délimités un intervalle annulaire 27 entre l'extrémité 23 de l'arbre d'induit et la partie 25, et un autre intervalle annulaire 28 entre la partie 26 et le stator 20.

Cette bague étagée 24 améliore sensiblement la maîtrise du jeu de l'arbre 23, car sur sa partie 26 en contact avec l'arbre 23, le diamètre ne peut varier puisque cette partie 26 est distante de l'intervalle 28 de la paroi intérieure du stator 20. Les irrégularités de celle-ci se transmettent donc uniquement à la partie 25, à laquelle sont transmises les contraintes subies par la partie 26. Ainsi les oscillations de l'arbre 23 sont notablement réduites.

Le motoréducteur 100 illustré à la figure 5 est destiné notamment à l'entraînement d'équipements de véhicules, tels que lève-vitre électriques.

Il comprend, logés à l'intérieur d'un boîtier 200, un stator 300 pouvant être alimenté par des connexions électriques 400 de manière connue, un rotor 500 pourvu d'un arbre d'induit 600 dont les extrémités sont montées dans des paliers 700, 800 de roulement. Cet arbre d'induit porte une vis sans fin 900 en prise avec une roue dentée 110 pouvant entraîner un organe de sortie 120, qui lui-même entraîne l'équipement associé au motoréducteur, par exemple un lève-vitre, un toit ouvrant...

L'extrémité 600a de l'arbre d'induit 600 traversant le palier 700, situé au voisinage de la vis sans fin 900, coopère avec un dispositif 120 de compensation automatique du jeu axial entre l'extrémité 600a et la paroi 130 du carter réducteur 140, afin d'équilibrer les efforts axiaux F développés par l'arbre d'induit 600 pendant le fonctionnement du motoréducteur.

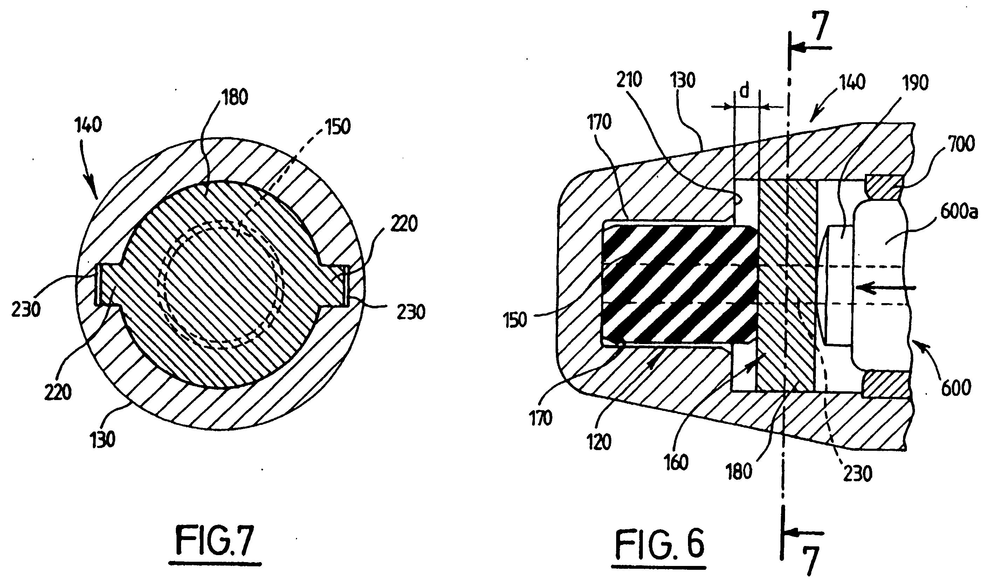

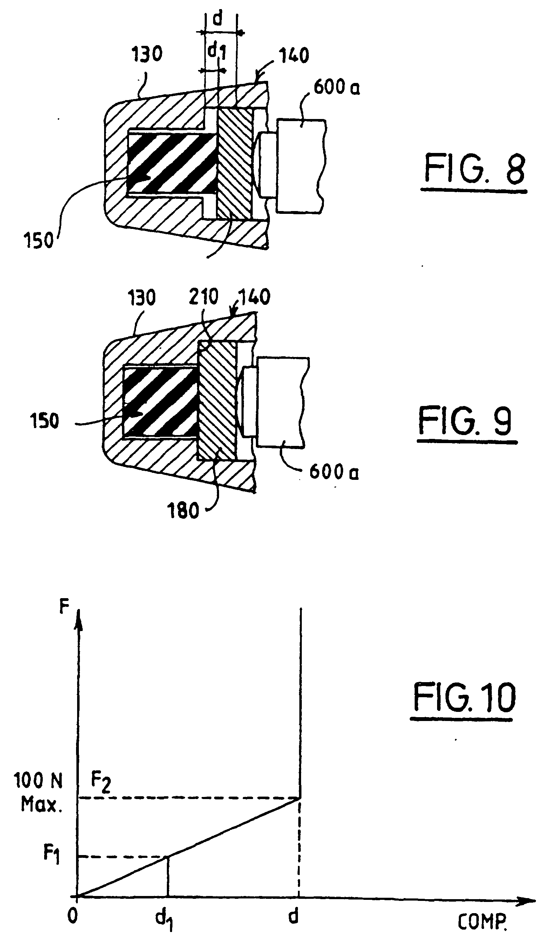

Dans le mode de réalisation représenté, ces moyens de réglage comprennent un amortisseur 150 en un matériau élastique tel qu'un élastomère, disposé avec un jeu annulaire radial (Fig.6) dans un logement terminal 170 de l'extrémité de la paroi 130 du carter 140, et une butée rigide 180 interposée entre l'extrémité 600a de l'arbre 600 et l'amortisseur 150. La butée rigide 180 est de préférence métallique et forme une pastille par exemple cylindrique, en appui contre la face d'extrémité de l'amortisseur 150, constitué par exemple par un cylindre en matériau déformable. La butée 180 est d'autre part en contact avec une capsule terminale 190 fixée à l'extrémité 600a de l'arbre d'induit 600. La butée rigide 180 est déplaçable axialement dans le carter 140 sur une course prédéterminée d correspondant au jeu axial de la ligne d'arbre entre sa position au repos hors charge (Fig.6) et sa position sous charge en fonctionnement du motoréducteur (Fig.9), La course d est limitée par un moyen d'arrêt, constitué dans l'exemple représenté par un épaulement transversal annulaire 210 agencé dans la paroi intérieure du carter 140, en regard de l'amortisseur 150.

La butée rigide 180 est pourvue de moyens antirotation autour de l'axe de l'arbre d'induit 600. Dans le mode de réalisation illustré à la figure 7, ces moyens consistent en deux pattes 220 saillant radialement de la périphérie de la butée 180 et diamétralement opposées, et qui sont engagées dans des crantages correspondants 230 formés dans la paroi intérieure 130 du carter 140. Ces crantages constituent des rainures 230 qui s'étendent longitudinalement jusqu'au plan transversal de l'épaulement 210, afin de permettre le coulissement des pattes 220 dans ces rainures 230 lorsque la butée 180 parcourt la course d.

Le fonctionnement du dispositif de compensation automatique du jeu axial qui vient d'être décrit est le suivant.

Avant assemblage de la ligne d'arbre, la butée 180 est distante du jeu d de l'épaulement 210 (Fig.6). Après assemblage du motoréducteur et sans charge, au repos, la ligne d'arbre 600 est en précompression avec un effort F1 fonction de la cote d1 (figure 8), inférieure à d. Dans cette position, l'amortisseur 150 subit un effort de précompression compris par exemple entre 0 et 100 Newtons, et le jeu ou cote restant d1 résulte de l'empilement des dimensions axiales des pièces constitutives du motoréducteur (arbre 600, butées, carter 140, culasse etc.).

La cote ou jeu d1 ainsi que le jeu d sont illustrés sur le diagramme de la figure 600, qui montre que l'effort axial F exercé par l'arbre d'induit 600 sur la butée 180 et sur l'amortisseur 150 croît linéairement de F1 à F2, c'est à dire jùsquà ce que la butée 180 vienne en arrêt contre l'épaulement transversal 210. L'effort maximum F2 subi par la butée 150 à ce moment est par exemple de 100 Newtons.

Dans le cas où le motoréducteur est en fonctionnement, lorsque l'effort axial F sur la ligne d'arbre dépasse la valeur prédéterminée F2, la butée métallique 180 vient donc en contact avec l'épaulement 210, lequel limite l'effort de compression sur l'amortisseur 150 à la valeur précitée.

Cette limitation évite un fluage du matériau élastique de l'amortisseur 150, et par conséquent sa détérioration par des efforts axiaux supérieurs à la valeur F2 atteinte lorsque la butée 180 vient en butée contre l'épaulement 210. Les efforts axiaux développés par l'arbre 600 augmentent alors brutalement (diagramme de la figure 10) et sont reportés directement sur l'épaulement 210 donc sur la paroi 130 du carter 140.

L'invention n'est pas limitée au mode d'exécution représenté et peut comporter diverses variantes, Ainsi par exemple tout moyen antirotation de la butée rigide 180 peut être utilisé, une seule patte ou ergot 220 pouvant éventuellement être mise en oeuvre.

Le dispositif de compensation automatique du jeu axial de la ligne d'arbre est d'une réalisation aisée et par conséquent peu onéreuse, tout en ayant une longue durée de vie grâce à la limitation des efforts de compression sur l'amortisseur 150 qui évite sa détérioration comme précédemment exposé.

En variante, le joint 9 peut comporter plus d'une lèvre, par exemple deux.

## Revendications

1. Motoréducteur, notamment pour l'entraînement d'équipements de véhicules, comprenant un rotor pourvu d'un arbre d'induit (600), un carter réducteur (140) qui contient une vis sans fin en prise avec une roue dentée (110) contenant un amortisseur (150), un organe de sortie entraîné en rotation par l'amortisseur, et des moyens d'étanchéité du carter qui comprennent une paroi annulaire de la roue dentée (110) et un joint disposé entre ladite paroi et la paroi (130) du carter, ce joint étant solidarisé soit avec le carter et en appui glissant sur la paroi annulaire, soit avec la paroi annulaire et en appui glissant sur lé carter, l'étanchéité étant réalisée entre une lèvre au moins du joint et ladite paroi annulaire, **caractérisé en ce qu'**il comprend un amortisseur (150) en un matériau élastomère et un système de butée rigide (180, 210) interposé entre l'extrémité (600a) de l'arbre (600) et l'amortisseur, et sur lequel prend appui l'extrémité de l'arbre, ledit système de butée rigide étant adapté pour limiter à une valeur prédéterminée (F2) l'effort de compression (F) axial subi par l'amortisseur, lorsque le motoréducteur est en fonctionnement, et **en ce que** la butée rigide (180) est pourvue de moyens antirotation (220, 230) autour de l'axe de l'arbre d'induit (600).

2. Motoréducteur selon la revendication 1, **caractérisé en ce que** la butée rigide (180) est interposée entre l'extrémité (600a) et l'arbre (600) et l'amortisseur (150) peut coulisser axialement à l'arbre (600) dans le carter (140) et venir en contact avec un moyen d'arrêt (210) réalisé dans l'extrémité du carter.

3. Motoréducteur selon la revendication 2, **caractérisé en ce que** le moyen d'arrêt est un épaulement transversal annulaire (210) agencé dans la paroi intérieure (130) du carter (140) en regard de l'amortisseur (150).

4. Motoréducteur selon la revendication 1, **caractérisé en ce que** les moyens anti-rotation consistent en au moins une patte radiale (220) et de préférence deux pattes (220) diamétralement opposées, faisant saillie de la périphérie de la butée rigide (180) et engagée dans un crantage correspondant (230) de la paroi intérieure (130) du carter (140), formant une rainure longitudinale qui permet le coulissement de la butée rigide (180) sur une course (d) égale au jeu axial.

## Patentansprüche

1. Getriebemotor, insbesondere für den Antrieb von Fahrzeugausrüstungen, mit einem mit einer Ankerwelle (600) versehenen Rotor, einem Untersetzungsgetriebegehäuse (140), welches eine Schnecke enthält, die mit einem einen Dämpfer (150) enthaltenden Zahnrad (110) in Eingriff ist, einer von dem Dämpfer drehend angetriebenen Ausgangseinrichtung, und Dichtungsmitteln für das Gehäuse, welche eine ringförmige Wand des Zahnrads (110) und eine zwischen dieser Wand und der Wand (130) des Gehäuses angeordnete Dichtung aufweisen, wobei diese Dichtung entweder mit dem Gehäuse fest verbunden und in gleitender Anlage an der ringförmigen Wand ist, oder mit der ringförmigen Wand fest verbunden und in gleitender Anlage an dem Gehäuse ist, wobei die Dichtheit zwischen einer Lippe wenigstens der Dichtung und der ringförmigen Wand erfolgt, **dadurch gekennzeichnet, dass** er einen Dämpfer (150) aus einem Elastomer und ein starres Widerlagersystem (180, 210), welches zwischen dem Ende (600a) der Welle (600) und dem Dämpfer zwischengelegt ist und an welchem das Ende der Welle zur Anlage kommt, wobei das starre Widerlagersystem so eingerichtet ist, dass es die axiale Druckkraft (F), die der Dämpfer erfährt, wenn der Getriebemotor in Betrieb ist, auf einen vorbestimmten Wert (F2) begrenzt, und dass das starre Widerlager (180) mit Mitteln (220, 230) zur Verhinderung einer Drehung um die Achse der Ankerwelle (600) versehen ist.

2. Getriebemotor nach Anspruch 1, **dadurch gekennzeichnet, dass** das starre Widerlager (180) zwischen dem Ende (600a) und der Welle (600) zwischengelegt ist und dass der Dämpfer (150) axial zur Welle (600) in dem Gehäuse (140) gleiten und mit im Ende des Gehäuses realisierten Anschlagmitteln (210) in Berührung kommen kann.

3. Getriebemotor nach Anspruch 2, **dadurch gekennzeichnet, dass** die Anschlagmittel eine transversale Ringschulter (210) sind, die in der Innenwand (130) des Gehäuses (140) dem Dämpfer (150) gegenüberstehend angeordnet ist.

4. Getriebemotor nach Anspruch 1, **dadurch gekennzeichnet, dass** die Drehverhinderungsmittel aus wenigstens einer radialen Klaue (220) und vorzugsweise zwei diametral gegenüberliegenden Klauen (220) bestehen, die über den Außenrand des starren Widerlagers (180) vorstehen und in einer entsprechenden Rastung (230) der Innenwand (130) des Gehäuses (140) im Eingriff sind, die eine Längsrille bildet, die das Gleiten des starren Widerlagers (180) auf einem Weg (d), der gleich dem axialen Spiel ist, gestattet.

## Claims

1. Geared motor, particularly for driving vehicle appliances, comprising a rotor provided with a rotor shaft (600), a reducer casing (140) which contains an endless screw in engagement with a gear wheel (110) containing a damper (150), an output member driven in rotation by the damper, and means for sealing the casing which comprise an annular wall of the gear wheel (110) and a joint arranged between the said wall and the wall (130) of the casing, this joint being integral with the casing and in sliding abutment on the annular wall or with the annular wall and in sliding abutment with the casing, forming a seal between at least one lip of the joint and the said annular wall, **characterised in that** it comprises a damper (150) made from an elastomeric material and a rigid stop system (180, 210) interposed between the end (660a) of the shaft (600) and the damper, and on which the end of the shaft rests, the said rigid stop system being adapted to limit, to a predetermined value (F2), the axial compressive stress (F) to which the damper is subjected when the geared motor is operating, and **in that** the rigid stop (180) is provided with anti-rotation means (220, 230) around the axle of the rotor shaft (600).

2. Geared motor according to claim 1, **characterised in that** the rigid stop (180) is interposed between the end (600a) and the shaft (600) and the damper (150) may slide axially to the shaft (600) in the casing (140) and come into contact with a stopping means (210) formed in the end of the casing.

3. Geared motor according to claim 2, **characterised in that** the stopping means is an annular transverse shoulder (210) arranged in the internal wall (130) of the casing (140) opposite the damper (150).

4. Geared motor according to claim 1, **characterised in that** the anti-rotation means consist of at least one radial lug (220) and preferably two lugs (220) diametrically opposed, projecting from the periphery of the rigid stop (180) and engaged in a corresponding notch (230) of the internal wall (130) of the casing (140), forming a longitudinal groove which allows the rigid stop (180) to slide for a travel (d) equal to the axial play.
